Europäisches Patentamt

European Patent Office

Office européen des brevets

(19)

(11) Veröffentlichungsnummer : **0 521 927 B1**

(12)

# EUROPÄISCHE PATENTSCHRIFT

(45) Veröffentlichungstag der Patentschrift :
**12.01.94 Patentblatt 94/02**

(21) Anmeldenummer : **91906275.2**

(22) Anmeldetag : **14.03.91**

(86) Internationale Anmeldenummer :
**PCT/EP91/00480**

(87) Internationale Veröffentlichungsnummer :
**WO 91/14711 03.10.91 Gazette 91/23**

(51) Int. Cl.⁵ : **C08F 2/06,** C08F 265/00,
C09D 151/00, B05D 7/26,
// (C08F265/00, 220:12,
220:20), (C09D151/00,
161:20)

(54) VERFAHREN ZUR HERSTELLUNG EINES MEHRSCHICHTIGEN ÜBERZUGES.

(30) Priorität : **28.03.90 DE 4009932**

(43) Veröffentlichungstag der Anmeldung :
**13.01.93 Patentblatt 93/02**

(45) Bekanntmachung des Hinweises auf die
Patenterteilung :
**12.01.94 Patentblatt 94/02**

(84) Benannte Vertragsstaaten :
**AT BE CH DE DK ES FR GB IT LI NL SE**

(56) Entgegenhaltungen :
**Chemical Abstracts, vol. 111, No. 22, 27 November 1989 (Columbus, Ohio, USA), page 108, abstract 196859q & JP-A-01104665**

(73) Patentinhaber : **BASF Lacke + Farben AG**
**Glasuritstrasse 1**
**D-48165 Münster-Hiltrup (DE)**

(72) Erfinder : **SCHWARTE, Stephan**
**Richard-Wagner-Strasse 6**
**D-4407 Emsdetten (DE)**
Erfinder : **DANGSCHAT, Manfred**
**Weitkamp 36**
**D-4406 Drensteinfurt 3 (DE)**
Erfinder : **REIMANN, Manfred**
**Heimstättenweg 12b**
**D-4406 Drensteinfurt (DE)**
Erfinder : **WESTERMANN, Carlos**
**Jahnstrasse 17**
**D-6451 Mainhausen (DE)**

(74) Vertreter : **Münch, Volker, Dr.**
**BASF Lacke + Farben AG**
**Patente/Lizenzen/Dokumentation Postfach 61 23**
**D-48136 Münster (DE)**

## Beschreibung

Die Erfindung betrifft ein Verfahren zur Herstellung eines mehrschichtigen schützenden und/oder dekorativen Überzuges auf einer Substratoberfläche, bei dem

(1) eine pigmentierte Basisbeschichtungszusammensetzung auf die Substratoberfläche aufgebracht wird

(2) aus der in Stufe (1) aufgebrachten ZusammenSetzung ein Polymerfilm gebildet wird

(3) auf die so erhaltene Basisschicht eine ein wasserverdünnbares Polyacrylatharz als Bindemittel und ein Aminoplastharz als Vernetzungsmittel enthaltende transparente wäßrige Deckbeschichtungszusammensetzung aufgebracht wird und anschließend

(4) die Basisschicht zusammen mit der Deckschicht eingebrannt wird.

Die Erfindung betrifft auch wäßrige Beschichtungszusammensetzungen, wasserverdünnbare Polyacrylatharze und ein Verfahren zur Herstellung von wasserverdünnbaren Polyacrylatharzen.

Das Verfahren gemäß Oberbegriff des Patentanspruchs 1 ist bekannt. Es wird insbesondere zur Herstellung von Automobil-Metalleffektlackierungen eingesetzt (vgl. z.B. US-PS-3,639,147, DE-A-33 33 072 und EP-A-38127).

Aus ökonomischen und ökologischen Gründen ist es wünschenswert, in Stufe (3) des oben beschriebenen sogenannten "base coat-clear coat"-Verfahrens wäßrige Deckbeschichtungszusammensetzungen einzusetzen.

Die Deckbeschichtungszusammensetzungen müssen mit Hilfe von automatischen Lackieranlagen durch Spritzen applizierbar sein. Dazu müssen sie bei Spritzviskosität einen so hohen Feststoffgehalt aufweisen, daß mit ein bis zwei Spritzgängen (Kreuzgängen) Lackfilme mit ausreichender Schichtdicke erhalten werden, und sie müssen eingebrannte Lackfilme liefern, die ein gutes Aussehen (guter Verlauf, hoher Glanz, guter Decklackstand...) zeigen.

Die in Beispiel 2 der EP-A-38127 offenbarte wäßrige Deckbeschichtungszuammmensetzung erfüllt nicht alle obengenannten Forderungen.

Die der vorliegenden Erfindung zugrundeliegende Aufgabenstellung besteht in der Bereitstellung von wäßrigen Deckbeschichtungszusammensetzungen, die die obengenannten Forderungen erfüllen.

Diese Aufgabe wird überraschenderweise durch Deckbeschichtungszusammensetzungen erfüllt, die ein wasserverdünnbares Polyacrylatharz als Bindemittel enthalten, das erhältlich ist, indem

(I)

(a1)    mehr als 25 bis weniger als 60, vorzugsweise 33 bis 50 Gew.-% eines mindestens eine Carboxylgruppe pro Molekül tragenden, mit (b1), (b2), (b3) und (a2) copolymerisierbaren ethylenisch ungesättigten Monomeren oder eines Gemisches aus solchen Monomeren zusammen mit

(a2)    40 - 75 Gew.-% eines carboxylgruppenfreien, mit (b1), (b2), (b3) und (a1) copolymerisierbaren ethylenisch ungesättigten Monomers oder eines Gemisches aus solchen Monomeren und

ein Gemisch (b), bestehend aus

(b1)    einem mit (b2), (b3), (a1) und (a2) copolymerisierbaren, im wesentlichen carboxylgruppenfreien (Meth)acrylsäureester oder einem Gemisch aus solchen (Meth)acrylsäureestern und

(b2)    einem mit (b1), (b3), (a1) und (a2) copolymerisierbaren, ethylenisch ungesättigten Monomeren, das mindestens eine Hydroxylgruppe pro Molekül trägt und im wesentlichen carboxylgruppenfrei ist oder einem Gemisch aus solchen Monomeren und gegebenenfalls

(b3)    einem mit (b1), (b2), (a1) und (a2) copolymerisierbaren, im wesentlichen carboxylgruppenfreien, von (b1) und (b2) verschiedenen, ethylenisch ungesättigten Monomeren oder einem Gemisch aus solchen Monomeren

- nacheinander zu einem organischen Lösemittel oder Lösemittelgemisch gegeben werden und in Gegenwart mindestens eines Polymerisationsinitiators polymerisiert werden, wobei mit der Zugabe des Gemisches (b) erst dann begonnen wird, wenn mindestens 60 Gew.-% der Komponenten (a1) und (a2) umgesetzt worden sind oder

- in Teilmengen alternierend zu einem organischen Lösemittel oder Lösemittelgemisch gegeben werden und in Gegenwart mindestens eines Polymerisationsinitiators polymerisiert werden, wobei die Teilmengen jeweils aus mindestens 10 Gew.-% der insgesamt einzusetzenden Menge an Komponente (a1) und (a2) bzw. Gemisch (b) bestehen und mit der Zugabe einer Teilmenge erst dann begonnen wird, wenn mindestens 60 Gew.-% der vorhergehenden Teilmenge umgesetzt worden sind und

(II) nach Beendigung der Polymerisation das erhaltene Polyacrylatharz zumindest teilweise neutralisiert und in Wasser dispergiert wird, wobei die Summe der Gewichtsanteile von (a1) und (a2) stets 100 Gew.-% ergibt und (b1), (b2), (b3), (a1) und (a2) in Art und Menge so ausgewählt werden, daß das Polyacrylatharz eine Hydroxylzahl von 40 bis 200, vorzugsweise 60 bis 140, eine Säurezahl von 20 bis 100, vorzugsweise 25

2

EP 0 521 927 B1

bis 50 und eine Glasübergangstemperatur ($T_G$) von -40 °C bis +60 °C, vorzugsweise -20 °C bis +40 °C, aufweist.

In der JP-A-1,104,665 werden wäßrige Beschichtungszusammensetzungen beschrieben, die wasserverdünnbare Aminoplastharze und Polyacrylatharze enthalten, die hergestellt werden, indem Vinylmonomere, die Hydroxyl- oder N-alkoxyalkylsubstituierte Amidgruppen enthalten, auf ein carboxylgruppenhaltiges Polyacrylatharz gepfropft werden. Diese Beschichtungszusammensetzungen werden zur Beschichtung von Dosen für Lebensmittel eingesetzt. In der JP-A-1,104,665 sind keinerlei Hinweise auf das "base coat-clear coat"-Verfahren und die bei diesem Verfahren auftretenden Probleme bei der automatischen Spritzapplikation von wäßrigen Deckbeschichtungszusammensetzungen zu finden.

Die in Stufe (1) des erfindungsgemäßen Verfahrens aufzubringenden pigmentierten Basisbeschichtungszusammensetzungen sind gut bekannt (vgl. z. B. US-PS 3,639,147, EP-A-38127, DE-A-33 33 072 und EP-A-279 813). In Stufe (1) werden vorzugsweise Metallpigmente enthaltende, insbesondere Aluminiumpigmente enthaltende Basisbeschichtungszusammensetzungen eingesetzt. Auf diese Weise werden Metalleffektlackierungen erhalten.

Bevor die Herstellung der erfindungsgemäß einzusetzenden Polyacrylatharze näher beschrieben wird, werden zwei Begriffsklärungen vorausgeschickt:

1) Als Abkürzung für "Methacrylsäure- oder Acrylsäure-" wird an manchen Stellen "(Meth)acrylsäure-" verwendet.

2) Die Formulierung "im wesentlichen carboxylgruppenfrei" soll ausdrücken, daß die Komponenten (b1), (b2) und (b3) einen geringen Carboxylgruppengehalt (höchstens aber soviel, daß ein aus den Komponenten (b1), (b2) und (b3) hergestelltes Polyacrylatharz eine Säurezahl von höchstens 10 hat) aufweisen können. Es ist aber bevorzugt, daß der Carboxylgruppengehalt der Komponenten (b1), (b2) und (b3) so niedrig wie möglich gehalten wird. Besonders bevorzugt werden carboxylgruppenfreie (b1), (b2) und (b3) Komponenten eingesetzt.

Zur Herstellung der erfindungsgemäß einzusetzenden Polyacrylatharze kann als Komponente (a1) jedes mindestens eine Carboxylgruppe pro Molekül tragende, mit (a2), (b1), (b2) und (b3) copolymerisierbare ethylenisch ungesättigte Monomer oder ein Gemisch aus solchen Monomeren eingesetzt werden. Als Komponente (a1) werden vorzugsweise Acrylsäure und/oder Methacrylsäure eingesetzt. Es können aber auch andere ethylenisch ungesättigte Säuren mit bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt. Als Komponente (a1) können z.B. auch Bernsteinsäuremono(meth) acryloyloxiethylester und Phtalsäuremono(meth)acryloyloxiethylester eingesetzt werden.

Als Komponente (a2) kann jedes mit (b1), (b2), (b3) und (a1) copolymerisierbare ethylenisch ungesättigte Monomer oder ein Gemisch aus solchen Monomeren eingesetzt werden. Als Komponente (a2) können alle bei der Beschreibung der Komponenten (b1), (b2) und (b3) aufgezählten Monomere eingesetzt werden.

Als Komponente (b1) kann jeder mit (b2), (b3), (a1) und (a2) copolymerisierbare, im wesentlichen carboxylgruppenfreie Ester der (Meth)acrylsäure oder ein Gemisch aus solchen (Meth)acrylsäureestern eingesetzt werden. Als Beispiele werden Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat genannt. Bevorzugt werden Gemische aus Alkylacrylaten und/oder Alkylmethacrylaten als (b1) Komponente eingesetzt, die mindestens 25 Gew.-% n-Butyl- oder t-Butylacrylat und/oder n-Butyl- oder t-Butylmethacrylat enthalten.

Als Komponente (b2) können alle mit (b1), (b3), (a1) und (a2) copolymerisierbaren ethylenisch ungesättigten Monomere, die mindestens eine Hydroxylgruppe pro Molekül tragen und im wesentlichen carboxylgruppenfrei sind oder ein Gemisch aus solchen Monomeren eingesetzt werden. Als Beispiele werden Hydroxyalkylester der Acrylsäure, Methacrylsäure oder einer anderen $\alpha,\beta$-ethylenisch ungesättigten Carbonsäure genannt. Diese Ester können sich von einem Alkylenglykol ableiten, das mit der Säure verestert ist, oder sie können durch Umsetzung der Säure mit einem Alkylenoxid erhalten werden. Als Komponente (b2) werden vorzugsweise Hydroxyalkylester der Acrylsäure und Methacrylsäure, in denen die Hydroxyalkylgruppe bis zu 4 Kohlenstoffatome enthält, Umsetzungsprodukte aus cyklischen Estern, wie z.B. $\Sigma$-Caprolacton und diesen Hydroxyalkylestern oder Mischungen aus diesen Hydroxyalkylestern bzw. $\Sigma$-caprolactonmodifizierten Hydroxyalkylestern eingesetzt. Als Beispiele für derartige Hydroxyalkylester werden 2-Hydroxyethylacrylat, 2-Hydroxypropylacrylat, 3-Hydroxypropylacrylat, 2-Hydroxypropylmethacrylat, 3-Hydroxypropylmethacrylat, 2-Hydroxyethylmethacrylat, 4-Hydroxybutylacrylat und 4-Hydroxybutylmethacrylat genannt. Entsprechende Ester von anderen ungesättigten Säuren, wie z.B. Ethacrylsäure, Crotonsäure und ähnliche Säuren mit bis zu etwa 6 Kohlenstoffatomen pro Molekül, können auch eingesetzt werden.

Als Komponente (b3) können alle mit (b1), (b2), (a1) und (a2) copolymerisierbaren, im wesentlichen carboxylgruppenfreien, von (b1) und (b2) verschiedenen ethylenisch ungesättigten Monomere oder Gemische

EP 0 521 927 B1

aus solchen Monomeren eingesetzt werden. Als Komponente (b3) werden vorzugsweise vinylaromatische Kohlenwasserstoffe, wie Styrol, $\alpha$-Alkylstyrol und Vinyltoluol eingesetzt.

Die erfindungsgemäß eingesetzten Polyacrylatharze können hergestellt werden, indem mehr als 25 bis weniger als 60, vorzugsweise 33 bis 50 Gew.-% der Komponente (a1) zusammen mit 40 - 75 Gew.-% der Komponente (a2) zu einem organischen Lösemittel oder Lösemittelgemisch gegeben werden, dort in Gegenwart mindestens eines Polymerisationsinitiators polymerisiert werden und nach Beendigung der Zugabe der Komponenten (a1) und (a2) ein Gemisch (b), bestehend aus den Komponenten (b1), (b2) und gegebenenfalls (b3) zu dem organischen Lösemittel oder Lösemittelgemisch gegeben wird und dort in Gegenwart mindestens eines Polymerisationsinitiators polymerisiert wird. Mit der Zugabe des Gemisches (b) sollte erst dann begonnen werden, wenn mindestens 60 Gew.-%, vorzugsweise mindestens 80 Gew.-% der Komponenten (a1) und (a2) umgesetzt worden sind. Es ist bevorzugt, mit der Zugabe des Gemisches (b) erst dann zu beginnen, wenn die Komponenten (a1) und (a2) im wesentlichen vollständig umgesetzt worden sind. Nach Beendigung der Polymerisation wird das erhaltene Polyacrylatharz zumindest teilweise neutralisiert und in Wasser dispergiert. Die Summe der Gewichtsanteile von (a1) und (a2) beträgt stets 100 Gew.-%. Die Komponenten (a1), (a2), (b1), (b2) und (b3) werden in Art und Menge so ausgewählt, daß das Polyacrylatharz eine Hydroxylzahl von 40 bis 200, vorzugsweise 60 bis 140, eine Säurezahl von 20 bis 100, vorzugsweise 25 bis 50 und eine Glasübergangs- temperatur ($T_G$) von -40 °C bis +60 °C, vorzugsweise -20 °C bis +40 °C, aufweist.

Das Gemisch aus (a1) und (a2) wird vorzugsweise innerhalb von 10 bis 90 Minuten, besonders bevorzugt innerhalb von 30 bis 75 Minuten zu dem organischen Lösemittel oder Lösemittelgemisch gegeben und dort in Gegenwart mindestens eines freie Radikale bildenden Initiators polymerisiert. Das Gemisch (b) wird vorzugsweise innerhalb von 2 bis 8 Stunden, besonders bevorzugt innerhalb von 3 bis 6 Stunden zu dem organischen Lösemittel oder Lösemittelgemisch gegeben und dort in Gegenwart mindestens eines freie Radikale bildenden Initiators polymerisiert.

Die erfindungsgemäß einzusetzenden Polyacrylatharze können auch hergestellt werden, indem das Gemisch aus (a1) und (a2) und das Gemisch (b) in Teilmengen alternierend zu einem organischen Lösemittel oder Lösemittelgemisch gegeben werden und dort in Gegenwart mindestens eines freie Radikale bildenden Initiators polymerisiert werden. Die Teilmengen sollten dabei jeweils aus mindestens 10 Gew.-% der insgesamt einzusetzenden Menge an Komponente (a1) und (a2) bzw. Gemisch (b) bestehen. Mit der Zugabe einer Teilmenge sollte erst dann begonnen werden, wenn mindestens 60 Gew.-%, vorzugsweise mindestens 80 Gew.-% der vorhergehenden Teilmenge umgesetzt worden sind. Es ist bevorzugt, mit der Zugabe einer Teilmenge erst dann zu beginnen, wenn die vorhergehende Teilmenge im wesentlichen vollständig umgesetzt worden ist. Nach Beendigung der Polymerisation wird das erhaltene Polyacrylatharz zumindest teilweise neutralisiert und in Wasser dispergiert. Die Summe der Gewichtsanteile von (a1) und (a2) beträgt stets 100 Gew.-%. Die Komponenten (a1), (a2), (b1), (b2) und (b3) werden in Art und Menge so ausgewählt, daß das Polyacrylatharz eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40°C bis +60°C, vorzugsweise -20°C bis +40°C, aufweist.

In einer bevorzugten Ausführungsform dieses Herstellungsverfahrens wird in einem ersten Schritt eine aus 30 bis 70 Gew.-%, vorzugsweise eine aus 40 bis 60 Gew.-%, besonders bevorzugt eine aus 50 Gew.-% der insgesamt einzusetzenden Menge an Komponente (b) bestehende Teilmenge der Komponente (b) (Teilmenge 1) zu dem organischen Lösemittel oder Lösemittelgemisch gegeben und in Gegenwart mindestens eines freie Radikale bildenden Initiators polymerisiert. Nach Beendigung der Zugabe der Teilmenge 1 wird in einem zweiten Schritt eine aus 30 bis 70 Gew.-%, vorzugsweise eine aus 40 bis 60 Gew.-%, besonders bevorzugt eine aus 50 Gew.-% der insgesamt einzusetzenden Menge an Gemisch aus (a1) und (a2) bestehende Teilmenge des Gemisches aus (a1) und (a2) (Teilmenge 2) zu dem organischen Lösemittel oder Lösemittelgemisch gegeben und in Gegenwart mindestens eines freie Radikale bildenden Initiators polymerisiert. Nach Beendigung der Zugabe der Teilmenge 2 wird in einem dritten Schritt eine aus 30 bis 70 Gew.-%, vorzugsweise eine aus 40 bis 60 Gew.-%, besonders bevorzugt eine aus 50 Gew.-% der insgesamt einzusetzenden Menge an Komponente (b) bestehende Teilmenge der Komponente (b) (Teilmenge 3) zu dem organischen Lösemittel oder Lösemittelgemisch gegeben und in Gegenwart mindestens eines freie Radikale bildenden Initiators polymerisiert. Nach Beendigung der Zugabe der Teilmenge 3 wird in einem vierten Schritt eine aus 30 bis 70 Gew.-%, vorzugsweise eine aus 40 bis 60 Gew.-%, besonders bevorzugt eine aus 50 Gew.-% der insgesamt einzusetzenden Menge an Gemisch aus (a1) und (a2) bestehende Teilmenge des Gemisches aus (a1) und (a2) (Teilmenge 4) zu dem organischen Lösemittel oder Lösemittelgemisch gegeben und in Gegenwart mindestens eines freie Radikale bildenden Initiators polymerisiert.

Mit der Zugabe der Teilmenge 2, 3 und 4 sollte erst dann begonnen werden, wenn mindestens 60 Gew.-%, vorzugsweise 80 Gew.-% der jeweils vorgehenden Teilmenge umgesetzt worden sind. Es ist bevorzugt, mit der Zugabe einer Teilmenge erst dann zu beginnen, wenn die vorgehende Teilmenge im wesentlichen vollständig umgesetzt worden ist.

4

Nach Beendigung der Polymerisation wird das erhaltene Polyacrylatharz zumindest teilweise neutralisiert und in Wasser dispergiert. Die Summe der Gewichtsanteile von (a1) und (a2) beträgt stets 100 Gew.-%. Die Komponenten (a1), (a2), (b1), (b2) und (b3) werden in Art und Menge so ausgewählt, daß das Polyacrylatharz eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40°C bis +60 °C, vorzugsweise -20 °C bis +40°C, aufweist.

Die Zugabe der Teilmengen 1 und 3 erfolgt vorzugsweise innerhalb von 1 bis 4 Stunden, besonders bevorzugt innerhalb von 1 1/2 bis 3 Stunden. Die Zugabe der Teilmengen 2 und 4 erfolgt vorzugsweise innerhalb von 5 bis 30 Minuten, besonders bevorzugt innerhalb von 7 bis 20 Minuten.

Als organische Lösemittel und Polymerisationsinitiatoren werden die für die Herstellung von Polyacrylatharzen üblichen und für die Herstellung von wäßrigen Dispersionen geeigneten Lösemittel und Polymerisationsinitiatoren eingesetzt. Als Beispiele für brauchbare Lösemittel werden Butylglykol, 2-Methoxypropanol, n-Butanol, Methoxybutanol, n-Propanol, Ethylenglycolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether und 3-Methyl-3-methoxybutanol genannt. Als Beispiele für brauchbare Polymerisationsinitiatoren werden freie Radikale bildende Initiatoren, wie z.B. Benzoylperoxid, t-Butylperethylhexanoat, Azobisisobutyronitril und t-Butylperbenzoat genannt. Die Polymerisation wird zweckmäßigerweise bei einer Temperatur von 80 bis 160 °C, vorzugsweise 110 bis 160 °C durchgeführt. Die Polymerisation ist beendet, wenn alle eingesetzten Monomeren im wesentlichen vollständig umgesetzt worden sind.

Die Komponenten (a1), (a2), (b1), (b2) und (b3) werden in Art und Menge so ausgewählt, daß das Reaktionsprodukt eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40 °C bis +60 °C, vorzugsweise -20 °C bis +40 °C, aufweist.

Die Glasübergangstemperaturen von Polyacrylatharzen können näherungsweise nach folgender Formel berechnet werden:

$$\frac{1}{T_G} \quad \sum_{n=1}^{n=x} \quad \frac{W_n}{T_{Gn}}$$

$T_G$ = Glasübergangstemperatur des Polyacrylatharzes

x = Anzahl der im Polyacrylatharz einpolymerisierten verschiedenen Monomeren.

$W_n$ = Gewichtsanteil des n-ten Monomers

$T_{Gn}$= Glasübergangstemperatur des Homopolymers aus dem n-ten Monomer

Die Menge und Zugabegeschwindigkeit des Initiators wird vorzugsweise so gesteuert, daß das erhaltene Polyacrylatharz ein zahlenmittleres Molekulargewicht von 2500 bis 20 000 aufweist. Es ist besonders bevorzugt, die Initiatorzugabe zum gleichen Zeitpunkt wie die Zugabe der polymerisierbaren Komponenten (a1), (a2) und (b) zu beginnen und etwa eine halbe Stunde nachdem die Zugabe der polymerisierbaren Komponenten (a1), (a2) und (b) beendet worden ist, zu beenden. Danach wird das Reaktionsgemisch noch so lange (in der Regel etwa 1 1/2 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu 0,5 Gew.-%, bezogen auf das Gewicht der Reaktionsmischung, unumgesetzt zurückbleiben kann.

Die erfindungsgemäßen Polyacrylatharze werden hergestellt, indem 40 bis 90 Gew.-%, vorzugsweise 40 bis 80 Gew.-% der Komponente (b1), 10 bis 45 Gew.-%, vorzugsweise 12 bis 35 Gew.-% der Komponente (b2), 0 bis 25 Gew.-%, vorzugsweise 8 bis 18 Gew.-% der Komponente (b3), 2,5 bis 15 Gew.-%, vorzugsweise 3 bis 7 Gew.-% der Komponente (a1) und 4 bis 60 Gew.-%, vorzugsweise 5 bis 28 Gew.-% der Komponente (a2) eingesetzt werden, wobei die Summe der Gewichtsanteile von (b1), (b2), (b3), (a1) und (a2) stets 100 Gew.-% ergibt.

Nach Beendigung der Polymerisation wird das erhaltene Polyacrylatharz zumindest teilweise neutralisiert und in Wasser dispergiert.

Zur Neutralisation können sowohl organische Basen als auch anorganische Basen verwendet werden. Vorzugsweise werden primäre, sekundäre und tertiäre Amine, wie z.B. Ethylamin, Propylamin, Dimethylamin, Dibutylamin, Cyclohexylamin, Benzylamin, Morpholin, Piperidin und Triethanolamin verwendet. Besonders bevorzugt werden tertiäre Amine als Neutralisationsmittel eingesetzt, insbesondere Dimethylethanolamin, Triethylamin, Tripropylamin und Tributylamin.

Die Neutralisationsreaktion wird im allgemeinen durch Mischen der neutralisierenden Base mit den Polyacrylatharz durchgeführt. Dabei wird vorzugsweise soviel Base eingesetzt, daß die Deckbeschichtungszusammensetzung einen pH-Wert von 7 - 8,5, vorzugsweise 7,2 bis 7,8 aufweist.

Anschließend wird das partiell oder vollständig neutralisierte Polyacrylatharz durch Zugabe von Wasser dispergiert. Dabei entsteht eine wäßrige Polyacrylatharzdispersion. Gegebenenfalls kann ein Teil oder das gesamte organische Lösemittel abdestilliert werden. Die erfindungsgemäßen Polyacrylatharzdispersionen enthalten Polyacrylatharzteilchen, deren mittlere Teilchengröße vorzugsweise zwischen 60 und 300 nm liegt (Meßmethode: Laserlichtstreuung, Meßgerät: Malvern Autosizer 2C).

Aus den so erhaltenen wäßrigen Polyacrylatharzdispersionen werden nach allgemein bekannten Methoden durch Zumischung eines Aminoplastharzes und gegebenenfalls weiterer Zusätze, wie z.B. Verlaufshilfsmittel, UV-Stabilisatoren, transparenten Pigmenten usw. erfindungsgemäße Deckbeschichtungszusammensetzungen erhalten.

Die erfindungsgemäßen Deckbeschichtungszusammensetzungen enthalten vorzugsweise soviel Aminoplastharz, daß das Gewichtsverhältnis, zwischen Polyacrylatharzfeststoff und Aminoplastharzfeststoff 60 : 40 bis 90 : 10, besonders bevorzugt 70 : 30 bis 85 : 15, beträgt.

Prinzipiell können alle Aminoplastharze, die sich mit dem erfindungsgemäßen Polyacrylatharz zu einer stabilen Deckbeschichtungszusammensetzung verarbeiten lassen, als Vernetzungsmittel eingesetzt werden. Vorzugsweise werden Melamin-Formaldehydharze, die mit aliphatischen Alkoholen, die vorzugsweise 1 bis 4 Kohlenstoffatome pro Molekül enthalten, teilweise oder vollständig verethert sind, als Vernetzungsmittel eingesetzt.

Vor der Applikation werden die erfindungsgemäßen Deckbeschichtungszusammensetzungen auf Spritzviskosität (im allgemeinen 20 bis 40 sec. Auslaufzeit aus DIN-Becher 4 (DIN 53211 (1974)) und einen pH-Wert von 7,0 bis 8,5, vorzugsweise 7,2 bis 7,8 eingestellt.

Die erfindungsgemäßen Deckbeschichtungszusammensetzungen

- weisen bei Spritzviskosität einen so hohen Feststoffgehalt (20 bis 45 Gew.-%, vorzugsweise 32 bis 40 Gew.-%) auf, daß mit ein bis zwei Spritzgängen (Kreuzgänge) Lackfilme mit ausreichender Schichtdicke (die Dicke des eingebrannten Lackfilms sollte vorzugsweise zwischen 25 und 45 $\mu$m liegen) erhalten werden und

- liefern eingebrannte Lackfilme mit einem sehr guten Aussehen (guter Verlauf, hoher Glanz, guter Decklackstand...) und guten mechanisch-technologischen Eigenschaften und

- weisen einen verhältnismäßig niedrigen Anteil an organischen Cosolventien (weniger als 35 Gew.-%, bezogen auf den Gesamtfeststoffgehalt an Bindemitteln und Vernetzungsmitteln) auf.

Wenn die erfindungsgemäßen Deckbeschichtungszusammensetzungen zusammen mit wasserverdünnbaren Basisbeschichtungszusammensetzungen zur Herstellung von Metalleffektlackierungen verwendet werden, dann werden Metalleffektlackierungen erhalten, in denen die transparente Deckschicht besonders gut auf der Basisschicht haftet.

Die erfindungsgemäßen Deckbeschichtungszusammensetzungen können neben dem erfindungsgemäß eingesetzten Polyacrylatharz auch noch vernetzte Polymermikroteilchen, wie sie z.B. in der EP-A-38127 offenbart sind und/oder weitere verträgliche Harze wie z.B. wasserverdünnbare oder wasserlösliche Polyacrylatharze, Polyesterharze, Alkydharze oder Epoxidharzester enthalten, und sie können auch pigmentiert werden.

Die erfindungsgemäßen Deckbeschichtungszusammensetzungen können sowohl bei der Serien- als auch bei der Reparaturlackierung eingesetzt werden.

In den folgenden Beispielen wird die Erfindung näher erläutert. Alle Angaben zu Teilen und Prozenten sind Gewichtsangaben, wenn nicht ausdrücklich etwas anderes angegeben wird.

A. Herstellung einer erfindungsgemäßen Deckbeschichtungaszusammensetzung

In einem Stahlkessel, ausgestattet mit Monomerzulauf, Initiatorzulauf, Thermometer, Ölheizung und Rückflußkühler werden 33 Gew.-Teile Butylglykol vorgelegt und auf 110 °C aufgeheizt. Dann wird eine Lösung von 3,5 Gew.-Teilen t-Butylperethylhexanoat in 0,49 Gew.-Teilen Butylglykol in einer solchen Geschwindigkeit zugegeben, daß die Zugabe nach 1 h 15 min. abgeschlossen ist. Mit Beginn der Zugabe der t-Butylperethylhexanoatlösung wird auch mit der Zugabe einer Mischung aus (a1) : 5,6 Gew.-Teilen Acrylsäure, (a2) : 3,3 Gew.-Teilen n-Butylacrylat, 2,2 Gew.-Teilen t-Butylacrylat und 1,1 Gew.-Teilen Hydroxipropylacrylat begonnen. Die Mischung aus (a1) und (a2) wird in einer solchen Geschwindigkeit zugegeben, daß die Zugabe nach 1 h abgeschlossen ist.

Nachdem die t-Butylperethylhexanoatlösung vollständig zugegeben worden ist, wird die Polymerisationstemperatur noch 1 h auf 110 °C gehalten. Dann wird bei 110 °C eine Lösung von 6,0 Gew.-Teilen t-Butylperethylhexanoat in 6,0 Gew.-Teilen Butylglykol in einer solchen Geschwindigkeit zugegeben, daß die Zugabe nach 5 h 30 min. abgeschlossen ist. Mit Beginn der Zugabe der t-Butylperethylhexanoatlösung wird auch mit der Zugabe einer Mischung aus (b1), 24,1 Gew.-Teilen n-Butylacrylat, 21,0 Gew.-Teilen t-Butylacrylat, 15,0 Gew.-Teilen Methylmethacrylat, (b2) :24,9 Gew.-Teilen Hydroxipropylacrylat und (b3) : 15,0 Gew.-Teilen Styrol begonnen. Die Mischung aus (b1), (b2) und (b3) wird in einer solchen Geschwindigkeit zugegeben, daß die Zugabe nach 5 h abgeschlossen ist.

Nachdem die t-Butylperethylhexanoatlösung vollständig zugegeben worden ist, wird die Polymerisationstemperatur noch 1 h auf 110 °C gehalten.

Die erhaltene Harzlösung wird im Vakuum destillativ auf 80 Gew.-% Feststoffgehalt aufkonzentriert und bei etwa 80 °C innerhalb von etwa 30 min. mit Dimethylethanolamin bis zu einem Neutralisationsgrad von 80 % neutralisiert. Dann wird die Harzlösung auf 60 °C abgekühlt. Danach werden 40 Gew.-Teile einer 70 %igen Lösung eines handelsüblichen wasserverdünnbaren Melaminformaldehydharzes (Maprenal MF 927® in Isobutanol und 0,14 Gew.-Teile eines handelsüblichen Verlaufmittels (Fluorad FC 430®) bei 60 °C zugegeben und es wird 1 h bei 60 °C homogenisiert. Anschließend wird soviel Wasser zugegeben, bis der Feststoffgehalt der Dispersion etwa 60 Gew.-% beträgt.

Die erhaltene Dispersion zeigt folgende Kennzahlen: Zahlenmittleres Molekulargewicht des Polyacrylatharzes aus (a1), (a2), (b1), (b2) und (b3): 4000, Säurezahl des Gesamtfestkörpers: 25,7, Feststoffgehalt (in Gew.-%; 1 h, 130 °C): 59,5%.

### B. Applikation der erfindungsgemäßen transparenten Deckbeschichtungszusammensetzung und Prüfung des eingebrannten Lackfilms

Die gemäß Punkt A hergestellte und auf Raumtemperatur abgekühlte Deckbeschichtungszusammensetzung wird mit einer 10 %igen wäßrigen Dimethylethanolaminlösung und destilliertem Wasser auf Spritzviskosität (24 s Auslaufzeit aus DIN-Becher 4 (DIN 53 211 1974) und einen pH-Wert von 7,5 - 7,6 eingestellt. Auf ein mit einer handelsüblichen Elektrotauchlackierung und einem handelsüblichen Füller beschichtetes phosphatiertes Stahlblech wird eine handeslübliche, Polyurethan, Polyester und Melaminharz enthaltende wasserverdünnbare, mit Aluminiumplättchen pigmentierte Basisbeschichtungszusammensetzung so appliziert, daß eine Trockenfilmdicke von 12-15 μm erhalten wird. Die applizierte Basisbeschichtungszusammensetzung wird 10 min. bei Raumtemperatur und 10 min. bei 80 °C getrocknet. Dann wird die gemäß Punkt A hergestellte Deckbeschichtungszusammensetzung in zwei Kreuzgängen mit einer Zwischenablüftzeit auf die Basisschicht gespritzt. Schließlich wird 20 min.bei Raumtemperatur getrocknet und 30 min. bei 130°C im Umluftofen eingebrannt. Die so erhaltene mehrschichtige Lackierung wurde mehreren Prüfungen unterzogen. Die Prüfergebnisse sind in der folgenden Tabelle zusammengefaßt.

```
Applikationsfeststoffgehalt
(1 h, 130 °C, in Gew.-%)          39,0


Dicke der transparenten
Deckschicht (µm)                  38


Gitterschnitt (1)                 0 - 1


Glanz (2)                         82


(1) Prüfung nach DIN 53 151 inklusive Tesaabriβ-Test
(2) Glanzgrad nach DIN 67530, Winkel 20 Grad
```

**Patentansprüche**

1. Verfahren zur Herstellung eines mehrschichtigen schutzenden und/oder dekorativen Überzuges auf einer Substratoberfläche, bei dem

(1) eine pigmentierte Basisbeschichtungszusammensetzung auf die Substratoberfläche aufgebracht wird

(2) aus der in Stufe (1) aufgebrachten Zusammensetzung ein Polymerfilm gebildet wird

(3) auf die so erhaltene Basisschicht eine ein wasserverdünnbares Polyacrylatharz als Bindemittel und ein Aminoplastharz als Vernetzungsmittel enthaltende transparente wäßrige Deckbeschichtungszusammensetzung aufgebracht wird und anschließend

(4) die Basisschicht zusammen mit der Deckschicht eingebrannt wird,

dadurch gekennzeichnet, daß die Deckbeschichtungszusammensetzung ein wasserverdünnbares Polyacrylatharz als Bindemittel enthält, das erhältlich ist, indem

(I)

(a1)  mehr als 25 bis weniger als 60, vorzugsweise 33 bis 50 Gew.-% eines mindestens eine Carboxylgruppe pro Molekül tragenden, mit (b1), (b2) (b3) und (a2) copolymerisierbaren ethylenisch ungesättigten Monomeren oder eines Gemisches aus solchen Monomeren zusammen mit

(a2)  40 - 75 Gew.-% eines carboxylgruppenfreien, mit (b1), (b2), (b3) und (a1) copolymerisierbaren ethylenisch ungesättigten Monomers oder eines Gemisches aus solchen Monomeren und

ein Gemisch (b), bestehend aus

(b1)  einem mit (b2), (b3), (a1) und (a2) copolymerisierbaren, im wesentlichen carboxylgruppenfreien (Meth)acrylsäureester oder einem Gemisch aus solchen (Meth)acrylsäureestern und

(b2)  einem mit (b1), (b3), (a1) und (a2) copolymerisierbaren, ethylenisch ungesättigten Monomeren, das mindestens eine Hydroxylgruppe pro Molekül trägt und im wesentlichen carboxylgruppenfrei ist oder einem Gemisch aus solchen Monomeren und gegebenenfalls

(b3)  einem mit (b1), (b2), (a1) und (a2) copolymerisierbaren, im wesentlichen carboxylgruppenfreien von (b1) und (b2) verschiedenen ethylenisch ungesättigten Monomeren oder einem Gemisch aus solchen Monomeren

- nacheinander zu einem organischen Lösemittel oder Lösemittelgemisch gegeben werden und in Gegenwart mindestens eines Polymerisationsinitiators polymerisiert werden, wobei mit der Zugabe des Gemisches (b) erst dann begonnen wird, wenn mindestens 60 Gew.-% der Komponenten (a1) und (a2) umgesetzt worden sind oder

- in Teilmengen alternierend zu einem organischen Lösemittel oder Lösemittelgemisch gegeben werden und in Gegenwart mindestens eines Polymerisationsinitiators polymerisiert werden, wobei die Teilmengen jeweils aus mindestens 10 Gew.-% der insgesamt einzusetzenden Menge an Komponente (a1) und (a2) bzw. Gemisch (b) bestehen und mit der Zugabe einer Teilmenge erst dann begonnen wird, wenn mindestens 60 Gew.-% der vorhergehenden Teilmenge umgesetzt worden sind und

(II)

nach Beendigung der Polymerisation das erhaltene Polyacrylatharz zumindest teilweise neutralisiert und in Wasser dispergiert wird, wobei die Summe der Gewichtsanteile von (a1) und (a2) stets 100 Gew.-% ergibt und (b1), (b2), (b3), (a1) und (a2) in Art und Menge so ausgewählt werden, daß das Polyacrylatharz eine Hydroxylzahl von 40 bis 200, vorzugsweise 60 bis 140, eine Säurezahl von 20 bis 100, vorzugsweise 25 bis 50 und eine Glasübergangstemperatur $(T_G)$ von -40 °C bis +60 °C, vorzugsweise -20 °C bis +40 °C, aufweist.

2. Wäßrige Beschichtungszusammensetzungen, enthaltend ein wasserverdünnbares Polyacrylatharz als Bindemittel und ein Aminoplastharz als Vernetzungsmittel, dadurch gekennzeichnet, daß das wasserverdünnbare Polyacrylatharz erhältlich ist,

indem

(I)

(a1)    mehr als 25 bis weniger als 60, vorzugsweise 33 bis 50 Gew.-% eines mindestens eine Carboxylgruppe pro Molekül tragenden, mit (b1), (b2) (b3) und (a2) copolymerisierbaren ethylenisch ungesättigten Monomeren oder eines Gemisches aus solchen Monomeren zusammen mit

(a2)    40 - 75 Gew.-% eines carboxylgruppenfreien, mit (b1), (b2), (b3) und (a1) copolymerisierbaren ethylenisch ungesättigten Monomers oder eines Gemisches aus solchen Monomeren und

ein Gemisch (b), bestehend aus

(b1)    einem mit (b2), (b3), (a1) und (a2) copolymerisierbaren, im wesentlichen carboxylgruppenfreien (Meth)acrylsäureester oder einem Gemisch aus solchen (Meth)acrylsäureestern und

(b2)    einem mit (b1), (b3), (a1) und (a2) copolymerisierbaren, ethylenisch ungesättigten Monomeren, das mindestens eine Hydroxylgruppe pro Molekül trägt und im wesentlichen carboxylgruppenfrei ist oder einem Gemisch aus solchen Monomeren und gegebenenfalls

(b3)    einem mit (b1), (b2), (a1) und (a2) copolymerisierbaren, im wesentlichen carboxylgruppenfreien, von (b1) und (b2) verschiedenen ethylenisch ungesättigten Monomeren oder einem Gemisch aus solchen Monomeren

- nacheinander zu einem organischen Lösemittel oder Lösemittelgemisch gegeben werden und in Gegenwart mindestens eines Polymerisationsinitiators polymerisiert werden, wobei mit der Zugabe des Gemisches (b) erst dann begonnen wird, wenn mindestens 60 Gew.-% der Komponenten (a1) und (a2) umgesetzt worden sind oder

- in Teilmengen alternierend zu einem organischen Lösemittel oder Lösemittelgemisch gegeben werden und in Gegenwart mindestens eines Polymerisationsinitiators polymerisiert werden, wobei die Teilmengen jeweils aus mindestens 10 Gew.-% der insgesamt einzusetzenden Menge an Komponente (a1) und (a2) bzw. Gemisch (b) bestehen und mit der Zugabe einer Teilmenge erst dann begonnen wird, wenn mindestens 60 Gew.-% der vorhergehenden Teilmenge umgesetzt worden sind und

(II)

nach Beendigung der Polymerisation das erhaltene Polyacrylatharz zumindest teilweise neutralisiert und in Wasser dispergiert wird, wobei die Summe der Gewichtsanteile von (a1) und (a2) stets 100 Gew.-% ergibt und (b1), (b2), (b3), (a1) und (a2) in Art und Menge so ausgewählt werden, daß das Polyacrylatharz eine Hydroxylzahl von 40 bis 200, vorzugsweise 60 bis 140, eine Säurezahl von 20 bis 100, vorzugsweise 25 bis 50 und eine Glasübergangstemperatur $(T_G)$ von -40°C bis +60°C, vorzugsweise -20°C bis +40°C, aufweist.

3. Verfahren nach Anspruch 1, dadurch gekennzeichnet, daß in Stufe (1) eine wäßrige, vorzugsweise Metallpigmente enthaltende Basisbeschichtungszusammensetzung aufgebracht wird.

4. Verfahren oder Beschichtungszusammensetzungen nach einem der Ansprüche 1-3, dadurch gekennzeichnet, daß zuerst eine aus 30 bis 70 Gew.-%, vorzugsweise eine aus 40 bis 60 Gew.-%, besonders bevorzugt eine aus 50 Gew.-% der insgesamt einzusetzenden Menge an Komponente (b) bestehende Teilmenge der Komponente (b) (Teilmenge 1) zugegeben wird, danach eine aus 30 bis 70 Gew.-%, vorzugsweise eine aus 40 bis 60 Gew.-%, besonders bevorzugt eine aus 50 Gew.-% der ingesamt einzusetzenden Menge an Gemisch aus (a1) und (a2) bestehende Teilmenge des Gemisches aus (a1) und (a2) (Teilmenge 2) zugegeben wird, danach eine aus 30 bis 70 Gew.-%, vorzugsweise eine aus 40 bis 60 Gew.-%, besonders bevorzugt eine aus 50 Gew.-% der insgesamt einzusetzenden Menge an Komponente (b) bestehende Teilmenge der Komponente (b) (Teilmenge 3) zugegeben wird und schließlich eine aus 30 bis 70 Gew.-%, vorzugsweise eine aus 40 bis 60 Gew.-%, besonders bevorzugt eine aus 50 Gew.-% der insgesamt einzusetzenden Menge an Gemisch aus (a1) und (a2) bestehende Teilmenge des Gemisches aus (a1) und (a2) (Teilmenge 4) zugegeben wird, wobei die Summe der Gewichtsanteile der Teilmengen 1 und 3 und die Summe der Gewichtsanteile der Teilmengen 2 und 4 stets 100 Gew.-% beträgt.

5. Verfahren oder Beschichtungszusammensetzungen nach Anspruch 4, dadurch gekennzeichnet, daß bei einer Temperatur von 80 bis 160 °C, vorzugsweise 110 bis 160 °C in Gegenwart mindestens eines freie Radikale bildenden Initiators polymerisiert wird und daß die Zugabe der Teilmenge 1 1 bis 4, vorzugsweise 1 1/2 bis 3 Stunden, die Zugabe der Teilmenge 2 5 bis 30, vorzugsweise 7 bis 20 Minuten, die Zugabe der Teilmenge 3 1 bis 4, vorzugsweise 1 1/2 bis 3 Stunden und die Zugabe der Teilmenge 4 5 bis 30, vorzugsweise 7 bis 20 Minuten dauert.

6. Wasserverdünnbare Polyacrylatharze, dadurch gekennzeichnet, daß sie erhältlich sind, indem

(I)

(a1)    mehr als 25 bis weniger als 60, vorzugsweise 33 bis 50 Gew.-% eines mindestens eine Carboxylgruppe pro Molekül tragenden, mit (b1), (b2), (b3) und (a2) copolymerisierbaren ethylenisch ungesättigten Monomeren oder eines Gemisches aus solchen Monomeren zusammen mit

(a2)    40 - 75 Gew.-% eines carboxylgruppenfreien, mit (b1), (b2), (b3) und (a1) copolymerisierbaren ethylenisch ungesättigten Monomers oder eines Gemisches aus solchen Monomeren und

ein Gemisch (b), bestehend aus

(b1)    einem mit (b2), (b3), (a1) und (a2) copolymerisierbaren, im wesentlichen carboxylgruppenfreien (Meth)acrylsäureester oder einem Gemisch aus solchen (Meth)acrylsäureestern und

(b2)    einem mit (b1), (b3), (a1) und (a2) copolymerisierbaren, ethylenisch ungesättigten Monomeren, das mindestens eine Hydroxylgruppe pro Molekül trägt und im wesentlichen carboxylgruppenfrei ist oder einem Gemisch aus solchen Monomeren und gegebenenfalls

(b3)    einem mit (b1), (b2), (a1) und (a2) copolymerisierbaren, im wesentlichen carboxylgruppenfreien, von (b1) und (b2) verschiedenen ethylenisch ungesättigten Monomeren oder einem Gemisch aus solchen Monomeren

- nacheinander zu einem organischen Lösemittel oder Lösemittelgemisch gegeben werden und in Gegenwart mindestens eines Polymerisationsinitiators polymerisiert werden, wobei mit der Zugabe des Gemisches (b) erst dann begonnen wird, wenn mindestens 60 Gew.-% der Komponenten (a1) und (a2) umgesetzt worden sind oder

- in Teilmengen alternierend zu einem organischen Lösemittel oder Lösemittelgemisch gegeben werden und in Gegenwart mindestens eines Polymerisationsinitiators polymerisiert werden, wobei die Teilmengen jeweils aus mindestens 10 Gew.-% der insgesamt einzusetzenden Menge an Komponente (a1) und (a2) bzw. Gemisch (b) bestehen und mit der Zugabe einer Teilmenge erst dann begonnen wird, wenn mindestens 60 Gew.-% der vorhergehenden Teilmenge umgesetzt worden sind und

(II)

nach Beendigung der Polymerisation das erhaltene Polyacrylatharz zumindest teilweise neutralisiert und in Wasser dispergiert wird, wobei die Summe der Gewichtsanteile von (a1) und (a2) stets 100 Gew.-% ergibt und (b1), (b2), (b3), (a1) und (a2) in Art und Menge so ausgewählt werden, daß das Polyacrylatharz eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40 °C bis +60 °C, vorzugsweise -20 °c bis +40 °C, aufweist.

7. Verfahren zur Herstellung von wasserverdünnbaren Polyacrylatharzen, dadurch gekennzeichnet, daß

(I)

(a1)      mehr als 25 bis weniger als 60, vorzugsweise 33 - 50 Gew.-% eines mindestens eine Carboxylgruppe pro Molekül tragenden, mit (b1), (b2), (b3) und (a2) copolymerisierbaren ethylenisch ungesättigten Monomeren oder eines Gemisches aus solchen Monomeren zusammen mit

(a2)      40 - 75 Gew.-% eines carboxylgruppenfreien, mit (b1), (b2), (b3) und (a1) copolymerisierbaren ethylenisch ungesättigten Monomers oder eines Gemisches aus solchen Monomeren und

ein Gemisch (b), bestehend aus

(b1)      einem mit (b2), (b3), (a1) und (a2) copolymerisierbaren, im wesentlichen carboxylgruppenfreien (Meth)acrylsäureester oder einem Gemisch aus solchen (Meth)acrylsäureestern und

(b2)      einem mit (b1), (b3),(a1) und (a2) copolymerisierbaren, ethylenisch ungesättigten Monomeren, das mindestens eine Hydroxylgruppe pro Molekül trägt und im wesentlichen carboxylgruppenfrei ist oder einem Gemisch aus solchen Monomeren und gegebenenfalls

(b3)      einem mit (b1), (b2), (a1) und (a2) copolymerisierbaren, im wesentlichen carboxylgruppenfreien, von (b1) und (b2) verschiedenen ethylenisch ungesättigten Monomeren oder einem Gemisch aus solchen Monomeren

    - nacheinander zu einem organischen Lösemittel oder Lösemittelgemisch gegeben werden und in Gegenwart mindestens eines Polymerisationsinitiators polymerisiert werden, wobei mit der Zugabe des Gemisches (b) erst dann begonnen wird, wenn mindestens 60 Gew.-% der Komponenten (a1) und (a2) umgesetzt worden sind oder

    - in Teilmengen alternierend zu einem organischen Lösemittel oder Lösemittelgemisch gegeben werden und in Gegenwart mindestens eines Polymerisationsinitiators polymerisiert werden, wobei die Teilmengen jeweils aus mindestens 10 Gew.-% der insgesamt einzusetzenden Menge an Komponente (a1) und (a2) bzw. Gemisch (b) bestehen und mit der Zugabe einer Teilmenge erst dann begonnen wird, wenn mindestens 60 Gew.-% der vorhergehenden Teilmenge umgesetzt worden sind und

(II)

nach Beendigung der Polymerisation das erhaltene Polyacrylatharz zumindest teilweise neutralisiert und in Wasser dispergiert wird, wobei die Summe der Gewichtsanteile von (a1) und (a2) stets 100 Gew.-% ergibt und (b1), (b2), (b3), (a1) und (a2) in Art und Menge so ausgewählt werden, daß das Polyacrylatharz eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40 °C bis +60 °C, vorzugsweise -20 °C bis +40 °C, aufweist.

8. Polyacrylatharz oder Verfahren nach Anspruch 6 oder 7, dadurch gekennzeichnet, daß zuerst eine aus 30 bis 70 Gew.-%, vorzugsweise eine aus 40 bis 60 Gew.-%, besonders bevorzugt eine aus 50 Gew.-% der insgesamt einzusetzenden Menge an Komponente (b) bestehende Teilmenge der Komponente (b) (Teilmenge 1) zugegeben wird, danach eine aus 30 bis 70 Gew.-%, vorzugsweise eine aus 40 bis 60 Gew.-%, besonders bevorzugt eine aus 50 Gew.-% der insgesamt einzusetzenden Menge an Gemisch aus (a1) und (a2) bestehende Teilmenge des Gemisches aus (a1) und (a2) (Teilmenge 2) zugegeben wird, danach eine aus 30 bis 70 Gew.-%, vorzugsweise eine aus 40 bis 60 Gew.-%, besonders bevorzugt eine aus 50 Gew.-% der insgesamt einzusetzenden Menge an Komponente (b) bestehende Teilmenge der Komponente (b) (Teilmenge 3) zugegeben wird, und schließlich eine aus 30 bis 70 Gew.-%, vorzugsweise eine aus 40 bis 60 Gew.-%, besonders bevorzugt eine aus 50 Gew.-% der insgesamt einzusetzenden Menge an Gemisch aus (a1) und (a2) bestehende Teilmenge des Gemisches aus (a1) und (a2) (Teilmenge 4) zugegeben wird, wobei die Summe der Gewichtsanteile der Teilmengen 1 und 3 und die Summe der Gewichtsanteile der Teilmengen 2 und 4 stets 100 Gew.-% beträgt.

## Claims

1. Process for the production of a multicoat protective and/or decorative coating on a substrate surface, in which process

(1) a pigmented basecoat composition is applied to the substrate surface,

(2) a polymeric film is formed from the composition applied in stage (1),

(3) a transparent aqueous topcoat composition containing a water-thinnable polyacrylate resin as binder and an amino resin as crosslinking agent is applied to the basecoat obtained in this way, and subsequently

(4) the basecoat is baked together with the topcoat,

characterized in that the topcoat composition contains a water-thinnable polyacrylate resin as binder, which resin can be obtained by adding, successively,

(I)

(a1)     more than 25 to less than 60, preferably 33 to 50%, by weight of an ethylenically unsaturated monomer which contains at least one carboxyl group per molecule and is copolymerizable with (b1), (b2), (b3) and (a2), or of a mixture of such monomers, together with

(a2)     40 - 75% by weight of an ethylenically unsaturated monomer which is free from carboxyl groups and is copolymerizable with (b1), (b2), (b3) and (a1), or of a mixture of such monomers, and

a mixture (b), consisting of

(b1)     a (meth)acrylic acid ester which is copolymerizable with (b2), (b3), (a1) and (a2) and is essentially free from carboxyl groups, or a mixture of such (meth)acrylic acid esters, and

(b2)     an ethylenically unsaturated monomer which is copolymerizable with (b1), (b3), (a1) and (a2), contains at least one hydroxyl group per molecule and is essentially free from carboxyl groups, or a mixture of such monomers, and, if appropriate,

(b3)     an ethylenically unsaturated monomer which is copolymerizable with (b1), (b2), (a1) and (a2), is essentially free from carboxyl groups and is different from (b1) and (b2), or a mixture of such monomers,

- to an organic solvent or solvent mixture and carrying out a polymerization in the presence of at least one polymerization initiator, the addition of the mixture (b) commencing only when at least 60% by weight of the components (a1) and (a2) have reacted or

- by adding the above alternately, in part amounts, to an organic solvent or solvent mixture and carrying out the polymerization in the presence of at least one polymerization initiator, the part amounts consisting in each case of at least 10% by weight of the total amount to be used of the component (a1) and (a2) and the mixture (b) and the addition of a part amount commencing only when at least 60% by weight of the preceding part amount have reacted, and

(II)

at the end of the polymerization, neutralizing, at least partially, the resultant polyacrylate resin and dispersing it in water, the sum of the proportions by weight of (a1) and (a2) always being 100% by weight and the type and amount of (b1), (b2), (b3), (a1) and (a2) being chosen so that the polyacrylate resin has a hydroxyl value of 40 to 200, preferably 60 to 140, an acid value of 20 to 100, preferably 25 to 50, and a glass transition temperature ($T_G$) of -40°C to +60°C, preferably -20°C to +40°C.

2.   Aqueous coating compositions containing a water-thinnable polyacrylate resin as binder and an amino resin as crosslinking agent, characterised in that the water-thinnable polyacrylate resin can be obtained by adding, successively,

(I)

(a1)     more than 25 to less than 60, preferably 33 to 50,% by weight of an ethylenically unsaturated monomer which contains at least one carboxyl group per molecule and is copolymerizable with (b1), (b2), (b3) and (a2), or of a mixture of such monomers, together with

(a2)     40 - 75% by weight of an ethylenically unsaturated monomer which is free from carboxyl groups and is copolymerizable with (b1), (b2), (b3) and (a1), or of a mixture of such monomers, and

a mixture (b), consisting of

(b1)     a (meth)acrylic acid ester which is copolymerizable with (b2), (b3), (a1) and (a2) and is essentially free from carboxyl groups, or a mixture of such (meth)acrylic acid esters, and

(b2)     an ethylenically unsaturated monomer which is copolymerizable with (b1), (b3), (a1) and (a2), contains at least one hydroxyl group per molecule and is essentially free from carboxyl groups, or a mixture of such monomers, and, if appropriate,

(b3)     an ethylenically unsaturated monomer which is copolymerizable with (b1), (b2), (a1) and (a2), is essentially free from carboxyl groups and is different from (b1) and (b2), or a mixture of such monomers,

- to an organic solvent or solvent mixture and carrying out a polymerization in the presence of at least one polymerization initiator, the addition of the mixture (b) commencing only when at least 60% by weight of the components (a1) and (a2) have reacted or

- by adding the above alternately, in part amounts, to an organic solvent or solvent mixture and carrying out the polymerization in the presence of at least one polymerization initiator, the part amounts consisting in each case of at least 10% by weight of the total amount to be used of the component (a1) and (a2) and the mixture (b) and the addition of a part amount commencing only when at least 60% by weight of the preceding part amount have reacted, and (II) at the end of the polymerization, neutralizing, at least partially, the resultant polyacrylate resin and dispersing it in water, the sum of the proportions by weight of (a1) and (a2) always being 100% by weight and the type and amount of (b1), (b2), (b3), (a1) and (a2) being chosen so that the polyacrylate resin has a hydroxyl value of 40 to 200, preferably 60 to 140, an acid value of 20 to 100, preferably 25 to 50, and a glass transition temperature ($T_G$) of -40°C to +60°C, preferably -20°C to +40°C.

3. Process according to Claim 1, characterized in that an aqueous basecoat composition, preferably containing metallic pigments, is applied in stage (1).

4. Process or coating compositions according to any one of Claims 1 - 3, characterized in that a part amount of the component (b) (part amount 1) consisting of 30 to 70% by weight, preferably of 40 to 60% by weight, particularly preferably of 50% by weight, of the total amount of the component (b) to be used is added first, a part amount of the mixture of (a1) and (a2) (part amount 2) consisting of 30 to 70% by weight, preferably of 40 to 60% by weight, particularly preferably of 50% by weight, of the total amount of the mixture of (a1) and (a2) to be used is added subsequently, a part amount of the component (b) (part amount 3) consisting of 30 to 70% by weight, preferably of 40 to 60% by weight, particularly preferably of 50% by weight, of the total amount of the component (b) to be used is added subsequently, and a part amount of the mixture of (a1) and (a2) (part amount 4) consisting of 30 to 70% by weight, preferably of 40 to 60% by weight, particularly preferably of 50% by weight, of the total amount of the mixture of (a1) and (a2) to be used is added finally, the sum of the proportions by weight of the part amounts 1 and 3 and the sum of the proportions by weight of the part amounts 2 and 4 always being 100% by weight.

5. Process or coating compositions according to Claim 4, characterized in that polymerization is carried out at a temperature of 80 to 160°C, preferably 110 to 160°C, in the presence of at least one free radicalforming initiator and wherein the addition of the part amount 1 takes 1 to 4, preferably 1½ to 3, hours, the addition of the part amount 2 takes 5 to 30, preferably 7 to 20, minutes, the addition of the part amount 3 takes 1 to 4, preferably 1½ to 3, hours and the addition of the part amount 4 takes 5 to 30, preferably 7 to 20, minutes.

6. Water-thinnable polyacrylate resins, characterized in that they are obtainable by adding, successively,

(I)

(a1) more than 25 to less than 60, preferably 33 to 50,% by weight of an ethylenically unsaturated monomer which contains at least one carboxyl group per molecule and is copolymerizable with (b1), (b2), (b3) and (a2), or of a mixture of such monomers, together with

(a2) 40 - 75% by weight of an ethylenically unsaturated monomer which is free from carboxyl groups and is copolymerizable with (b1), (b2), (b3) and (a1), or of a mixture of such monomers, and

a mixture (b), consisting of

(b1) a (meth)acrylic acid ester which is copolymerizable with (b2), (b3), (a1) and (a2) and is essentially free from carboxyl groups, or a mixture of such (meth)acrylic acid esters, and

(b2) an ethylenically unsaturated monomer which is copolymerizable with (b1), (b3), (a1) and (a2), contains at least one hydroxyl group per molecule and is essentially free from carboxyl groups, or a mixture of such monomers, and, if appropriate,

(b3) an ethylenically unsaturated monomer which is copolymerizable with (b1), (b2), (a1) and (a2), is essentially free from carboxyl groups and is different from (b1) and (b2), or a mixture of such monomers,

- to an organic solvent or solvent mixture and carrying out a polymerization in the presence of at least one polymerization initiator, the addition of the mixture (b) commencing only when at least 60% by weight of the components (a1) and (a2) have reacted or

- by adding the above alternately, in part amounts, to an organic solvent or solvent mixture and carrying out the polymerization in the presence of at least one polymerization initiator, the part amounts consisting in each case of at least 10% by weight of the total amount to be used of the component (a1) and (a2) and the mixture (b) and the addition of a part amount commencing only when at least 60% by weight of the preceding part amount have reacted, and

(II)

at the end of the polymerization, neutralizing, at least partially, the resultant polyacrylate resin and dispersing it in water, the sum of the proportions by weight of (a1) and (a2) always being 100% by weight and the type and amount of (b1), (b2), (b3), (a1) and (a2) being chosen so that the polyacrylate resin has a hydroxyl value of 40 to 200, preferably 60 to 140, an acid value of 20 to 100, preferably 25 to 50, and a glass transition temperature ($T_G$) of -40°C to +60°C, preferably -20°C to +40°C.

7. Process for the preparation of water-thinnable polyacrylate resins, characterized in that it comprises adding successively

(I)

(a1)     more than 25 to less than 60, preferably 33 - 50, % by weight of an ethylenically unsaturated monomer which contains at least one carboxyl group per molecule and is copolymerizable with (b1), (b2), (b3) and (a2), or of a mixture of such monomers, together with

(a2)     40 - 75% by weight of an ethylenically unsaturated monomer which is free from carboxyl groups and is copolymerizable with (b1), (b2), (b3) and (a1), or of a mixture of such monomers, and

a mixture (b), consisting of

(b1)     a (meth)acrylic acid ester which is copolymerizable with (b2), (b3), (a1) and (a2) and is essentially free from carboxyl groups, or a mixture of such (meth)acrylic acid esters, and

(b2)     an ethylenically unsaturated monomer which is copolymerizable with (b1), (b3), (a1) and (a2), contains at least one hydroxyl group per molecule and is essentially free from carboxyl groups, or a mixture of such monomers, and, if appropriate,

(b3)     an ethylenically unsaturated monomer which is copolymerizable with (b1), (b2), (a1) and (a2), is essentially free from carboxyl groups and is different from (b1) and (b2), or a mixture of such monomers,

- to an organic solvent or solvent mixture and carrying out a polymerization in the presence of at least one polymerization initiator the addition of the mixture (b) commencing only when at least 60% by weight of the components (a1) and (a2) have reacted or

- by adding the above alternately, in part amounts, to an organic solvent or solvent mixture and carrying out the polymerization in the presence of at least one polymerization initiator, the part amounts consisting in each case of at least 10% by weight of the total amount to be used of the component (a1) and (a2) and the mixture (b) and the addition of a part amount commencing only when at least 60% by weight of the preceding part amount have reacted, and

(II)

at the end of the polymerization, neutralizing, at least partially, the resultant polyacrylate resin and dispersing it in water, the sum of the proportions by weight of (a1) and (a2) always being 100% by weight and the type and amount of (b1), (b2), (b3), (a1) and (a2) being chosen so that the polyacrylate resin has a hydroxyl value of 40 to 200, preferably 60 to 140, an acid value of 20 to 100, preferably 25 to 50, and a glass transition temperature ($T_G$) of -40°C to +60°C, preferably -20°C to +40°C.

8. Polyacrylate resin or according to process Claim 6 or 7, characterized in that a part amount of the component (b) (part amount 1) consisting of 30 to 70% by weight, preferably of 40 to 60% by weight, particularly preferably of 50% by weight, of the total amount of the component (b) to be used is added first, a part amount of the mixture of (a1) and (a2) (part amount 2) consisting of 30 to 70% by weight, preferably of 40 to 60% by weight, particularly preferably of 50% by weight, of the total amount of the mixture of (a1) and (a2) to be used is added subsequently, a part amount of the component (b) (part amount 3) consisting of 30 to 70% by weight, preferably of 40 to 60% by weight, particularly preferably of 50% by weight, of the total amount of the component (b) to be used is added subseqently, and a part amount of the mixture of (a1) and (a2) (part amount 4) consisting of 30 to 70% by weight, preferably of 40 to 60% by weight, particularly preferably of 50% by weight, of the total amount of the mixture of (a1) and (a2) to be used is added finally, the sum of the proportions by weight of the part amounts 1 and 3 and the sum of the proportions by weight of the part amounts 2 and 4 always being 100% by weight.

## Revendications

1. Procédé de préparation d'un enduit à plusieurs couches, protecteur et/ou décoratif sur une surface de substrat, par :

(1) l'application d'une composition de base d'enduction sur la surface de substrat;

(2) la formation sur la composition de l'étape (1), d'une pellicule polymère;

(3) l'application sur cette couche de base ainsi préparée d'une composition d'enduction de couverture transparente aqueuse, contenant une résine de polyacrylate susceptible d'être diluée dans l'eau comme liant, et d'une résine aminoplastique comme agent de réticulation, et ensuite,

(4) la cuisson de la couche de base, ainsi que de la couche de couverture,

caractérisé en ce que la composition d'enduction de couverture contient une résine de polyacrylate susceptible d'être dissoute dans de l'eau, qui se compose de :

(I)

(a1) plus de 25 à au moins 60, de préférence 33 à 50% en poids de monomères insaturés éthyléniques, copolymérisables avec (b1), (b2), (b3) et (a2), portant au moins un radical carboxylique, ou d'un mélange de tels monomères, avec

(a2) 40 à 75% en poids de monomères insaturés éthyléniques, copolymérisables avec (b1), (b2), (b3) et (a1), exempt de radical carboxylique, ou un mélange de tels monomères, et

un mélange (b), composé de :

(b1) un ester de (méth)acrylate copolymérisable avec (b2), (b3), (a1) et (a2), essentiellement exempt de radical carboxylique, ou un mélange de tels esters de (méth)acrylate;

(b2) un monomère insaturé éthylénique, copolymérisable avec (b1), (b3), (a1) et (a2), qui porte au moins un radical hydroxyle par molécule et est essentiellement exempt de radical carboxylique, ou un mélange de tels monomères, et facultativement

(b3) un monomère insaturé éthylénique, copolymérisable avec (b1), (b2), (a1) et (a2), essentiellement exempt de radical carboxylique, différent de (b1) et de (b2) ou un mélange de tels monomères,

- l'un après l'autre sont mis en solution dans un solvant ou un mélange de solvants organiques et sont polymérisés en présence d'au moins un initiateur de polymérisation, où on commence par l'addition du mélange (b), auquel on fait réagir au moins 60% en poids des composants (a1) et (a2),

ou

- ils sont mis en solution dans des quantités partielles alternées d'un solvant organique ou d'un mélange de solvants organiques, et sont polymérisés en présence d'au moins un initiateur de polymérisation, où la quantité partielle consiste en au moins 10% en poids du mélange total produit des composants (a1) et (a2) ou du mélange (b) et est commencé avec l'addition d'une quantité partielle, si au moins 60% en poids de la quantité partielle précédente a réagi, et

(II)

après achèvement de la polymérisation, la résine de polyacrylate préparée est neutralisée au moins en partie et dispersée dans de l'eau, où la somme des parties en poids de (a1) et de (a2) atteint toujours 100% en poids et (b1), (b2), (b3), (a1) et (a2) sont choisis pour le type et la quantité, de sorte que la résine de polyacrylate présente une teneur en radicaux hydroxyle de 40 à 200, de préférence de 60 à 140, un teneur en acides de 20 à 100, de préférence de 25 à 50 et une température de transition vitreuse ($T_G$) de -40°C à +60°C, de préférence de -20°C à +40°C.

2. Composition d'enduction aqueuse, contenant une résine de polyacrylate susceptible d'être diluée dans l'eau comme agent liant et une résine aminoplastique comme agent de réticulation, caractérisée en ce que la résine de polyacrylate susceptible d'être diluée dans l'eau se compose de :

(I)

(a1) plus de 25 à au moins 60, de préférence 33 à 50% en poids de monomères insaturés éthyléniques, copolymérisables avec (b1), (b2), (b3) et (a2), portant au moins un radical carboxylique, ou d'un mélange de tels monomères, avec

(a2) 40 à 75% en poids de monomères insaturés éthyléniques, copolymérisables avec (b1), (b2), (b3) et (a1), exempt de radical carboxylique, ou un mélange de tels monomères, et

un mélange (b), composé de :

(b1) un ester de (méth)acrylate copolymérisable avec (b2), (b3), (a1) et (a2), essentiellement exempt de radical carboxylique, ou un mélange de tels esters de (méth)acrylate;

(b2) un monomère insaturé éthylénique, copolymérisable avec (b1), (b3), (a1) et (a2), qui porte au moins un radical hydroxyle par molécule et est essentiellement exempt de radical carboxylique, ou un mélange de tels monomères, et facultativement

(b3) un monomère insaturé éthylénique, copolymérisable avec (b1), (b2), (a1) et (a2), essentiellement exempt de radical carboxylique, différent de (b1) et de (b2) ou un mélange de tels monomères,

- l'un après l'autre sont mis en solution dans un solvant ou un mélange de solvants organiques et sont polymérisés en présence d'au moins un initiateur de polymérisation, où on commence par l'addition du mélange (b), auquel on fait réagir au moins 60% en poids des composants (a1) et (a2),

ou

- ils sont mis en solution dans des quantités partielles alternées d'un solvant organique ou d'un mélange de solvants organiques, et sont polymérisés en présence d'au moins un initiateur de polymérisation, où la quantité partielle consiste en au moins 10% en poids du mélange total produit des composants (a1) et (a2) ou du mélange (b) et est commencée avec l'addition d'une quantité partielle, si au moins 60% en poids de la quantité partielle précédente a réagi, et

(II)

après achèvement de la polymérisation, la résine de polyacrylate préparée est neutralisée au moins en partie et dispersée dans de l'eau, où la somme des parties en poids de (a1) et de (a2) atteint toujours 100% en poids et (b1), (b2), (b3), (a1) et (a2) sont choisis pour le type et la quantité, de sorte que la résine de polyacrylate présente une teneur en radicaux hydroxyle de 40 à 200, de préférence de 60 à 140, un teneur en acides de 20 à 100, de préférence de 25 à 50 et une température de transition vitreuse ($T_G$) de -40°C à +60°C, de préférence de -20°C à +40°C.

3. Procédé suivant la revendication 1, caractérisé en ce que dans l'étape (1), une composition d'enduction de base aqueuse, contenant de préférence un pigment métallique est introduite.

4. Procédé ou composition d'enduction suivant l'une quelconque des revendications 1 à 3, caractérisé en ce que d'abord, une partie du composant (b), se composant de 30 à 70% en poids, de préférence 40 à 60% en poids, avec avantage 50% en poids de la quantité précitée introduite du composant (b) (partie 1) est ajoutée, ensuite une partie du mélange de (a1) et de (a2), se composant de 30 à 70% en poids, de préférence 40 à 60% en poids, avec avantage 50% en poids de la quantité précitée introduite du mélange de (a1) et de (a2) (partie 2) est ajoutée, ensuite une partie du composant (b), consistant en 30 à 70% en poids, de préférence 40 à 60% en poids, avec avantage 50% en poids du mélange précité du composant (b) (partie 3) est ajoutée, et finalement on ajoute une partie du mélange de (a1) et de (a2), consistant en 30 à 70% en poids, de préférence 40 à 60% en poids, avec avantage 50% en poids de la quantité précitée du mélange de (a1) et de (a2) (partie 4), où la somme de la partie en poids des parties 1 et 3 et la somme de la partie en poids des parties 2 et 4 atteint 100% en poids.

5. Procédé ou composition d'enduction suivant la revendication 4, caractérisé en ce qu'il est polymérisé à une température de 80°C à 160°C, de préférence 110°C à 160°C, en présence d'un initiateur constituant des radicaux libres et que l'addition de la partie 1 dure de 1 à 4 heures de préférence de 1,5 à 3 heures, l'addition de la partie 2, de 5 à 30 minutes, de préférence 7 à 20 minutes, l'addition de la partie 3, de 1 à 4 minutes, de préférence de 1,5 à 3 minutes, et l'addition de la partie 4, de 5 à 30 minutes, de préférence 7 à 20 minutes.

6. Résine de polyacrylate susceptible d'être diluée dans l'eau, caractérisée en ce qu'elle peut être préparée par :

(I)

(a1) plus de 25 à au moins 60, de préférence 33 à 50% en poids de monomères insaturés éthyléniques, copolymérisables avec (b1), (b2), (b3) et (a2), portant au moins un radical carboxylique, ou d'un mélange de tels monomères, avec

(a2) 40 à 75% en poids de monomères insaturés éthyléniques, copolymérisables avec (b1), (b2), (b3) et (a1), exempt de radical carboxylique, ou un mélange de tels monomères, et

un mélange (b), composé de :

(b1) un ester de (méth)acrylate copolymérisable avec (b2), (b3), (a1) et (a2), essentiellement exempt de radical carboxylique, ou un mélange de tels esters de (méth)acrylate;

(b2) un monomère insaturé éthylénique, copolymérisable avec (b1), (b3), (a1) et (a2), qui porte au moins un radical hydroxyle par molécule et est essentiellement exempt de radical carboxylique, ou un mélange de tels monomères, et facultativement

(b3) un monomère insaturé éthylénique, copolymérisable avec (b1), (b2), (a1) et (a2), essentiellement exempt de radical carboxylique, différent de (b1) et de (b2) ou un mélange de tels monomères,

- l'un après l'autre sont mis en solution dans un solvant ou un mélange de solvants organiques et sont polymérisés en présence d'au moins un initiateur de polymérisation, où on commence par l'addition du mélange (b), auquel on fait réagir au moins 60% en poids des composants (a1) et (a2), ou

- ils sont mis en solution dans des quantités partielles alternées d'un solvant organique ou d'un mélange de solvants organiques, et sont polymérisés en présence d'au moins un initiateur de polymérisation, où la quantité partielle consiste en au moins 10% en poids du mélange total produit des composants (a1) et (a2) ou du mélange (b) et est commencée avec l'addition d'une quantité partielle, si au moins 60% en poids de la quantité partielle précédente a réagi, et

(II)

après achèvement de la polymérisation, la résine de polyacrylate préparée est neutralisée au moins en partie et dispersée dans de l'eau, où la somme des parties en poids de (a1) et de (a2) atteint toujours 100% en poids et (b1), (b2), (b3), (a1) et (a2) sont choisis pour le type et la quantité, de sorte que la résine de polyacrylate présente une teneur en radicaux hydroxyle de 40 à 200, de préférence de 60 à 140, un teneur en acides de 20 à 100, de préférence de 25 à 50 et une température de transition vitreuse ($T_G$) de -40°C à +60°C, de préférence de -20°C à +40°C.

7. Procédé de préparation d'une résine de polyacrylate susceptible d'être diluée dans l'eau, caractérisé en ce que :

(I)

(a1) plus de 25 à au moins 60, de préférence 33 à 50% en poids de monomères insaturés éthyléniques, copolymérisables avec (b1), (b2), (b3) et (a2), portant au moins un radical carboxylique, ou d'un mélange de tels monomères, avec

(a2) 40 à 75% en poids de monomères insaturés éthyléniques, copolymérisables avec (b1), (b2), (b3) et (a1), exempt de radical carboxylique, ou un mélange de tels monomères, et

un mélange (b), composé de :

(b1) un ester de (méth)acrylate copolymérisable avec (b2), (b3), (a1) et (a2), essentiellement exempt de radical carboxylique, ou un mélange de tels esters de (méth)acrylate;

(b2) un monomère insaturé éthylénique, copolymérisable avec (b1), (b3), (a1) et (a2), qui porte au moins un radical hydroxyle par molécule et est essentiellement exempt de radical carboxylique, ou un mélange de tels monomères, et facultativement

(b3) un monomère insaturé éthylénique, copolymérisable avec (b1), (b2), (a1) et (a2), essentiellement exempt de radical carboxylique, différent de (b1) et de (b2) ou un mélange de tels monomères,

- l'un après l'autre sont mis en solution dans un solvant ou un mélange de solvants organiques et sont polymérisés en présence d'au moins un initiateur de polymérisation, où on commence par l'addition du mélange (b), auquel on a fait réagir au moins 60% en poids des composants (a1) et (a2), ou

- ils sont mis en solution dans des quantités partielles alternées d'un solvant organique ou d'un mélange de solvants organiques, et sont polymérisés en présence d'au moins un initiateur de polymérisation, où la quantité partielle consiste en au moins 10% en poids du mélange total produit des composants (a1) et (a2) ou du mélange (b) et est commencée avec l'addition d'une quantité partielle, si au moins 60% en poids de la quantité partielle précédente a réagi, et

(II)

après achèvement de la polymérisation, la résine de polyacrylate préparée est neutralisée au moins en partie et dispersée dans de l'eau, où la somme des parties en poids de (a1) et de (a2) atteint toujours 100% en poids et (b1), (b2), (b3), (a1) et (a2) sont choisis pour le type et la quantité, de sorte que la résine de polyacrylate présente une teneur en radicaux hydroxyle de 40 à 200, de préférence de 60 à 140, une teneur en acides de 20 à 100, de préférence de 25 à 50 et une température de transition vitreuse ($T_G$) de -40°C à +60°C, de préférence de -20°C à +40°C.

8. Résine de polyacrylate suivant le procédé de la revendication 6 ou 7, caractérisée en ce que d'abord, une partie du composant (b), se composant de 30 à 70% en poids, de préférence 40 à 60% en poids, avec avantage 50% en poids de la quantité précitée introduite du composant (b) (partie 1) est ajoutée, ensuite une partie du mélange de (a1) et de (a2), se composant de 30 à 70% en poids, de préférence 40 à 60% en poids, avec avantage 50% en poids de la quantité précitée introduite du mélange de (a1) et de (a2) (partie 2) est ajoutée, ensuite une partie du composant (b), consistant en 30 à 70% en poids, de préférence 40 à 60% en poids, avec avantage 50% en poids du mélange précité du composant (b) (partie 3) est ajoutée, et finalement on ajoute une partie du mélange de (a1) et de (a2), consistant en 30 à 70% en poids, de préférence 40 à 60% en poids, avec avantage 50% en poids de la quantité précitée du mélange de (a1) et de (a2) (partie 4), où la somme de la partie en poids des parties 1 et 3 et la somme de la partie en poids des parties 2 et 4 atteint 100% en poids.